(19) Europäisches Patentamt
European Patent Office
Office européen des brevets

(11) **EP 4 650 473 A1**

(12) **EUROPEAN PATENT APPLICATION**
published in accordance with Art. 153(4) EPC

(43) Date of publication:
**19.11.2025 Bulletin 2025/47**

(21) Application number: **24741503.7**

(22) Date of filing: **09.01.2024**

(51) International Patent Classification (IPC):
*C22C 38/00* $^{(2006.01)}$    *C22C 38/60* $^{(2006.01)}$
*H01F 1/147* $^{(2006.01)}$    *C21D 8/12* $^{(2006.01)}$

(52) Cooperative Patent Classification (CPC):
**C22C 38/00; C22C 38/60; H01F 1/147;** C21D 8/12;
Y02P 10/20

(86) International application number:
**PCT/JP2024/000131**

(87) International publication number:
**WO 2024/150730 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 JP 2023001933**

(71) Applicant: NIPPON STEEL CORPORATION
Chiyoda-ku
Tokyo 100-8071 (JP)

(72) Inventors:
• **SUGIURA, Natsuko**
  **Tokyo 100-8071 (JP)**
• **MURAKAWA, Tesshu**
  **Tokyo 100-8071 (JP)**
• **OTA, Shun**
  **Tokyo 100-8071 (JP)**
• **TANAKA, Ichiro**
  **Tokyo 100-8071 (JP)**

(74) Representative: **Vossius & Partner**
**Patentanwälte Rechtsanwälte mbB**
**Siebertstrasse 3**
**81675 München (DE)**

(54) **NON-ORIENTED ELECTROMAGNETIC STEEL SHEET**

(57) To provide a non-oriented electromagnetic steel sheet containing, by % by mass, C: 0.0100% or less, Si: from 1.50% to 4.00%, Sol.Al: from 0.0001% to 1.0%, S: 0.0100% or less, N: 0.0100% or less, Mn: 0.10% or more, and one kind or a plurality of kinds selected from Mn, Ni, or Cu: less than 2.50% in total, in which a transformation temperature $Ar_3$ (°C) is from 750 to 1050°C, and a sheet thickness is 0.50 mm or less and a random intensity ratio of {411}<011> at a 1/2 sheet thickness part is 4.0 or more.

FIG. 1

## Description

Technical Field

The present disclosure relates to a non-oriented electromagnetic steel sheet.

Background Art

Non-oriented electromagnetic steel sheets are used in, for example, iron cores of motors, and non-oriented electromagnetic steel sheets are required to be excellent in magnetic characteristics, for example, low in iron loss and high in magnetic flux density on average in all directions parallel to sheet surfaces thereof (hereinafter, sometimes referred to as "all-direction average in sheet surface"). Although various techniques have been heretofore proposed, it is difficult to obtain sufficient magnetic characteristics in all directions in sheet surfaces. For example, even in a case in which sufficient magnetic characteristics are obtained in certain directions in sheet surfaces, sufficient magnetic characteristics are not sometimes obtained in other directions in such sheet surfaces.

It is well known that development of {100} crystal orientations or decrease of {111} crystal orientations is effective for enhancements in magnetic characteristics. In order to control such crystal orientations, studies about component systems in which $\gamma \rightarrow \alpha$ phase transformation occurs have been variously made as shown in Patent Literature 1 to 6. One point in such techniques is to refine hot-rolled structures. Fine grain $\alpha$-phase structures in hot-rolled sheets are realized by setting steel compositions low in $\gamma \rightarrow \alpha$ phase transformation temperature, accumulating a large amount of strain in $\gamma$-phases by hot rolling in low-temperature $\gamma$-regions, and performing transformation therefrom. These structures are realized by use of addition of $\gamma$-stabilized elements such as Mn, Cu, and Ni from the viewpoint of promotion of accumulation of strain by not only a decrease in transformation temperature, but also delaying of recovery and recrystallization.

However, Mn is known as a segregation element, and in the case of being increased in content thereof, is segregated at the sheet thickness center parts of hot-rolled sheets and causes cracking in cold rolling of such hot-rolled sheets.

Since {100}<011> orientations are mainly developed in techniques utilizing $\gamma \rightarrow \alpha$ phase transformation, the in-plane anisotropy is large, and crystal orientation control different from conventional one is demanded.

Citation List

Patent Literature

Patent Literature 1: Japanese Patent Publication (JP-B) No. 4029430
Patent Literature 2: JP-B No. 6319465
Patent Literature 3: Japanese Patent Application Laid-Open (JP-A) No. 2017-193731
Patent Literature 4: WO2021/095846
Patent Literature 5: JP-A No. 2021-080501
Patent Literature 6: JP-A No. 2020-100860

SUMMARY OF INVENTION

Technical Problem

In view of the above problems, an object of the disclosure is to provide a non-oriented electromagnetic steel sheet in which a steel sheet having a chemical composition in which Mn is suppressed so as not to cause rollability to be problematic and also the contents of elements such as Mn, Cu, and Ni are optimized can obtain magnetic characteristics of a small in-plane anisotropy and an excellent all-direction average.

Solution to Problem

(1) A non-oriented electromagnetic steel sheet according to one aspect of the disclosure includes,

in percentage by mass,
C: 0.0100% or less,
Si: from 1.50% to 4.00%,

sol.Al: from 0.0001% to 1.0%,
S: 0.0100% or less,
N: 0.0100% or less,
Mn: 0.10% or more,
one kind or a plurality of kinds selected from Mn, Ni, or Cu: less than 2.50% in total;
Mo: from 0.00% to less than 2.50%,
Cr: from 0.00% to less than 2.50%,
Ti: from 0.000% to 0.005%,
Nb: from 0.000% to 0.005%,
Sn: from 0.000% to 0.400%,
Sb: from 0.000% to 0.400%,
P: from 0.000% to 0.400%, and
one kind or a plurality of kinds selected from the group consisting of Mg, Ca, Sr, Ba, Ce, La, Nd, Pr, Zn, and Cd: from 0.0000% to 0.0100% in total, wherein:

the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities,
a sheet thickness is 0.50 mm or less, and
a random intensity ratio of {411}<011> at a 1/2 sheet thickness part is 4.0 or more:

$$Ar_3 \text{ (°C)} = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \tag{1}$$

(2) A non-oriented electromagnetic steel sheet according to one aspect of the disclosure includes,

in percentage by mass,
C: 0.0100% or less,
Si: from 1.50% to 4.00%,
sol.Al: from 0.0001% to 1.0%,
S: 0.0100% or less,
N: 0.0100% or less,
Mn: 0.10% or more,
one kind or a plurality of kinds selected from Mn, Ni, Co, Pt, Pb, Au, or Cu: less than 2.50% in total;
Mo: from 0.00% to less than 2.50%,
Cr: from 0.00% to less than 2.50%,
Ti: from 0.000% to 0.005%,
Nb: from 0.000% to 0.005%,
Sn: from 0.000% to 0.400%,
Sb: from 0.000% to 0.400%,
P: from 0.000% to 0.400%, and
one kind or a plurality of kinds selected from the group consisting of Mg, Ca, Sr, Ba, Ce, La, Nd, Pr, Zn, and Cd: from 0.0000% to 0.0100% in total, wherein:

the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C and the balance consists of Fe and impurities,
a sheet thickness is 0.50 mm or less, and
a random intensity ratio of {411}<011> at a 1/2 sheet thickness part is 4.0 or more:

$$Ar_3 \text{ (°C)} = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \tag{1}$$

(3) In the non-oriented electromagnetic steel sheet according to the above (1) or (2),
a magnetic flux density $B_{50}$ in a 45° direction with respect to a rolling direction may be 1.75 T or more.

(4) In the non-oriented electromagnetic steel sheet according to the above (3),
in a case in which a value of a magnetic flux density B50 in a rolling direction is $B_{50L}$, a value of the magnetic flux density $B_{50}$ in a 45° direction with respect to a rolling direction is $B_{50D}$, and a value of a magnetic flux density $B_{50}$ in a 90° direction with respect to a rolling direction is $B_{50C}$, the following Formula (2) may be satisfied:

$$|B_{50D}-(B_{50L} + B_{50C})/2| \leq 0.3 \ldots (2).$$

Advantageous Effect of Invention

The above aspects of the disclosure can provide a non-oriented electromagnetic steel sheet in which a steel sheet having a chemical composition in which Mn is suppressed so as not to cause rollability to be problematic and also the contents of elements such as Mn, Cu, and Ni are optimized can obtain magnetic characteristics of a small in-plane anisotropy and an excellent all-direction average.

BRIEF DESCRIPTION OF DRAWING

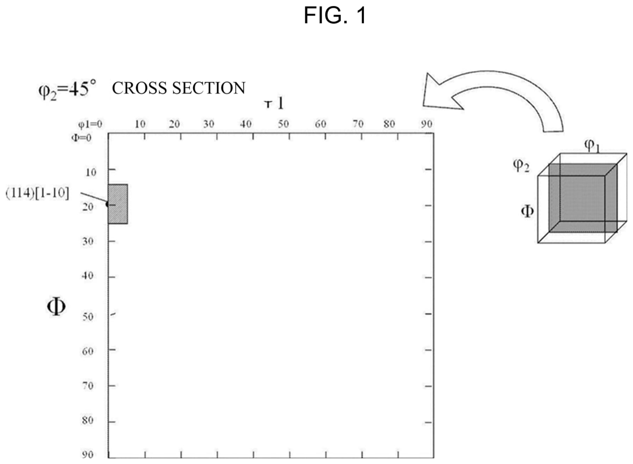

[FIG. 1] FIG. 1 illustrates ODF of a $\varphi2 = 45$° cross section, in which one example of the crystal orientation in the disclosure is displayed.

DESCRIPTION OF EMBODIMENTS

The present inventors have made intensive studies in order to solve the above problems. As a result, it has been found that the amount of Mn added is reduced, to ensure rollability and furthermore component adjustment is performed and also hot rolling conditions are optimized, to form an appropriate $\alpha$-processed grain structure in a hot-rolled sheet, thereby developing {411}<011> at the 1/2 sheet thickness part in subsequent cold rolling and intermediate annealing. The {411}<011> oriented grain is further enriched by strain-induced grain boundary migration (SIBM) due to final annealing during application of skin pass rolling and then final annealing to the above intermediate annealed sheet. It has been revealed that enrichment of {411}<011> at the 1/2 sheet thickness part is effective for a reduction in-plane anisotropy and an improvement in all-direction average in magnetic characteristics.

The inventors have further made intensive studies based on these findings, and as a result, have conceived the disclosure.

Hereinafter, embodiments of the disclosure are described in detail. Herein, a numerical value range expressed with "(from) ... to ..." means a range including numerical values described before and after "to" as the lower limit value and the upper limit value. It is also obvious that each element in embodiments below can be combined.

The "non-oriented electromagnetic steel sheet" in embodiments of the disclosure encompasses not only a coil-shaped or cut sheet-shaped steel sheet, but also a steel sheet processed as a material for a product (member) such as a motor core, into a specified shape, and furthermore a steel sheet that is processed and then layered, to form a motor core.

First, chemical compositions of a non-oriented electromagnetic steel sheet according to an embodiment of the disclosure and a steel material used in the production method of the steel sheet are described. In the following description, the expression "%" as the unit of the content of each element included in the non-oriented electromagnetic steel sheet or the steel material means "in percentage by mass", unless particularly noted. The chemical composition of the non-oriented electromagnetic steel sheet indicates the content under the assumption that a base material excluding a film and the like is 100%.

The upper limit value in a certain numerical value range described stepwise, as a numerical value range described stepwise herein, may be replaced with the upper limit value in any other numerical value range described stepwise, or may be replaced with a value shown in Examples.

The lower limit value in a certain numerical value range described stepwise, as a numerical value range described stepwise herein, may be replaced with the lower limit value in any other numerical value range described stepwise, or may be replaced with a value shown in Examples.

The non-oriented electromagnetic steel sheet according to the present embodiment has a chemical composition capable of allowing for the occurrence of ferrite-austenite transformation (hereinafter, $\alpha$-$\gamma$ transformation), in which,

in percentage by mass,

C: 0.0100% or less,
Si: from 1.50% to 4.00%,
sol.Al: from 0.0001% to 1.0%,
S: 0.0100% or less,
N: 0.0100% or less,
Mn: 0.10% or more,
one kind or a plurality of kinds selected from Mn, Ni, or Cu: less than 2.50% in total;
Mo: from 0.00% to less than 2.50%
Cr: from 0.00% to less than 2.50%
Ti: from 0.000% to 0.005%
Nb: from 0.000% to 0.005%
Sn: from 0.000% to 0.400%,
Sb: from 0.000% to 0.400%,
P: from 0.000% to 0.400%, and
one kind or a plurality of kinds selected from the group consisting of Mg, Ca, Sr, Ba, Ce, La, Nd, Pr, Zn, and Cd: from 0.0000% to 0.0100% in total are contained, and furthermore the contents of C, Si, P, sol.Al, Mn, Mo, Cu, Cr and Ni satisfy predetermined conditions described below and the balance consists of Fe and impurities.

The non-oriented electromagnetic steel sheet according to the embodiment preferably contains less than 2.50% in total of one kind or a plurality of kinds selected from Mn, Ni, Co, Pt, Pb, Au, or Cu.

Examples of such impurities include those included in a raw material such as ore or scrap, or those included during a production process.

(C: 0.0100% or less)

C increases iron loss and/or causes magnetic aging. Accordingly, a lower C content is more preferred. Such a phenomenon is remarkably caused at a C content of more than 0.0100%. Therefore, the C content is set to 0.0100% or less. A reduction in C content also contributes to uniform enhancements in magnetic characteristics in all directions in the sheet surface. The lower limit of the C content is not particularly limited, and is preferably 0.0005% or more in consideration of the cost of a decarburization treatment during refining.

(Si: from 1.50% to 4.00%)

Si increases the electric resistance, thereby resulting in a decrease in eddy-current loss and a reduction in iron loss, and increases the yield ratio, thereby resulting in an enhancement in punching processability to an iron core. A Si content of less than 1.50% cannot sufficiently provide such effects. Accordingly, the Si content is set to 1.50% or more. In this regard, a Si content of more than 4.00% causes a decrease in magnetic flux density, and an excess increase in hardness and thus a decrease in punching processability, and makes cold rolling difficult. Accordingly, the Si content is set to 4.00% or less.

(Sol.Al: from 0.0001% to 1.0%)

Sol.Al increases the electric resistance, thereby resulting in a decrease in eddy-current loss and a reduction in iron loss. Sol.Al also contributes to an enhancement in relative magnitude of the magnetic flux density $B_{50}$ to the saturated magnetic flux density. A sol.Al content of less than 0.0001% cannot sufficiently provide such effects. Al has also a desulfurization promotion effect in steelmaking. Accordingly, the sol.Al content is set to 0.0001% or more. In this regard, a sol.Al content of more than 1.0% leads to a decrease in magnetic flux density or a decrease in yield ratio, resulting in a decrease in punching processability. Accordingly, the sol.Al content is set to 1.0% or less.

Herein, sol.Al means acid-soluble Al which is not in the form of an oxide such as $Al_2O_3$ and which is soluble in an acid.

The magnetic flux density $B_{50}$ here means a magnetic flux density in a magnetic field at 5000 A/m.

(S: 0.0100% or less)

S is not an essential element, and for example, is contained as an impurity in steel. S is in the form of a precipitate of fine MnS, and inhibits recrystallization and crystal grain growth in annealing. Accordingly, a lower S content is more preferred. Such increase in iron loss and decrease in magnetic flux density due to inhibition of recrystallization and crystal grain growth remarkably occur at a S content of more than 0.0100%. Thus, the S content is set to 0.0100% or less. The lower limit of the S content is not particularly limited, and is preferably set to 0.0003% or more in consideration of the cost of a desulfurization treatment in refining.

(N: 0.0100% or less)

N degrades magnetic characteristics as in C, and therefore a lower N content is more preferred. Accordingly, the N content is set to 0.0100% or less. The lower limit of the N content is not particularly limited, and is preferably 0.0010% or more in consideration of the cost of a denitrification treatment in refining.

(One Kind or Plurality of Kinds Selected from Mn, Ni, or Cu: less than 2.50% in Total)

In a case in which 2.5% or more in total of Mn, Ni, and Cu are contained, anisotropy in magnetic characteristics is increased and therefore the total of Mn, Ni, and Cu is set to less than 2.5%. The reason for an increase in anisotropy, although not clear, is considered because slip deformation in a ferrite region is affected and formation of the {100} orientation and recrystallization are promoted. The content of an alloy element is preferably increased by 2.3% or less from this viewpoint. The lower limit value of the total of Mn, Ni, and Cu is not particularly limited, and, for example, may be set to 0.10% or more, may be set to 0.50% or more, or 1.00% or more, or furthermore may also be set to 2.00% or more.

(One Kind or Plurality of Kinds Selected from Mn, Ni, Co, Pt, Pb, Au, or Cu: less than 2.50% in Total)

In addition to Mn, Ni, and Cu described above, Co, Pt, Pb, and Au also increase anisotropy in magnetic characteristics, and therefore the total content of these elements is preferably less than 2.50% in the embodiment. These elements also lead to a decrease in magnetic flux density, and therefore the total thereof is preferably set to less than 2.00%. The lower limit of the total of Mn, Ni, Co, Pt, Pb, Au, and Cu is not particularly limited, and, for example, may be set to 0.10% or more, may be set to 0.50% or more, or 1.00% or more, or furthermore may also be set to 2.00% or more.
In particular, Co, Pt, Pb, and Au are expensive in terms of the alloy cost and thus are to be avoided from being actively added. Also in consideration of control of the $Ar_3$ transformation point as one feature of the embodiment, the $Ar_3$ transformation point is preferably controlled by inclusion of Mn, Ni, and Cu. Therefore, the total of Co, Pt, Pb, and Au is less than 0.5%, still more preferably 0.1% or less, and furthermore these elements are suppressed within inevitable elements incorporated and are not needed to be actively added (the total may also be set to 0%).
The non-oriented electromagnetic steel sheet and the steel material according to the embodiment further satisfy the following conditions as conditions in which $\alpha$-$\gamma$ transformation can occur. In other words, in a case in which, in percentage by mass, the C content is [C], the Mo content is [Mo], the Cr content is [Cr], the Mn content is [Mn], the Ni content is [Ni], the Cu content is [Cu], the Si content is [Si], the sol.Al content is [sol.Al], and the P content is [P], the transformation temperature $Ar_3$ (°C) defined by the following Formula (1) satisfies from 750 to 1050°C.

$$Ar_3 \ (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \tag{1}$$

In a case in which the above Formula (1) is not satisfied, the transformation point is not in an appropriate temperature range even in the case of the occurrence of $\alpha$-$\gamma$ transformation and therefore a sufficient magnetic flux density cannot be obtained even by application of a production method described below. An $Ar_3$ transformation point of less than 750°C lowers the temperature in hot rolling, thereby resulting in not only an increase in deformation resistance and a too large load on a rolling machine, but also an increase in amount of an element added, thereby causing a hot-rolled sheet and a cold-rolled sheet to be decreased in toughness, and therefore this value is defined as the lower limit. In this regard, an $Ar_3$ transformation point of more than 1050°C excessively increases the temperature in hot rolling, thereby resulting in a need for heating at an extremely high temperature and thus an increase load on a heating furnace, or resulting in a component system in which $\gamma \rightarrow \alpha$ transformation does not occur, and therefore this value is defined as the upper limit.

(Mn: 0.10% or more in Total of One Kind or Plurality of Kinds Selected from Mn, Ni, or Cu, or less than 2.5% in Total of One Kind or Plurality of Kinds Selected from Mn, Ni, Co, Pt, Pb, Au, or Cu)

Mn lowers the $Ar_3$ transformation point and can allow for refinement of a crystal grain in a hot-rolled sheet due to phase transformation in a component system of the non-oriented electromagnetic steel sheet according to the embodiment. Mn is an element which increases the electric resistance of steel and reduces iron loss. Therefore, 0.10% or more of Mn is contained. From this viewpoint, more preferably 0.50% or more, still more preferably 1.00% or more of Mn is contained. In this regard, Mn is an element which is easily segregated, and in the case of being increased in content, not only causes cracking in cold-processing, due to segregation, but also decreases the saturated magnetic flux density and prevents the steel sheet from being increased in magnetic flux density. MnS is also excessively produced, thereby resulting in a decrease in cold processability. Therefore, the upper limit of the Mn content is restricted to less than 2.5%. A specific upper limit of the Mn content is preferably 2.3% by mass or less, more preferably 2.0% by mass or less.

(Cu: less than 2.5% in Total of One Kind or Plurality of Kinds Selected from Mn, Ni, or Cu, or One Kind or Plurality of Kinds Selected from Mn, Ni, Co, Pt, Pb, Au, or Cu)

Cu is an element which allows the steel sheet to be increased in electric resistance and reduced in iron loss as in Mn, and is an element which lowers the $Ar_3$ transformation point to allow for refinement of the grain size in a hot-rolled sheet due to phase transformation in the chemical composition of the non-oriented electromagnetic steel sheet according to the embodiment. However, an increased Cu content not only has an adverse effect on texture formation in annealing after cold rolling, due to an increase in recrystallization temperature, and also causes hot embrittlement, but also decreases the saturated magnetic flux density and prevents an increase in magnetic flux density of the steel sheet, and therefore requires attention. Accordingly, the Cu content is restricted to less than 2.5%. Herein, hot embrittlement due to Cu can be alleviated by composite addition of Ni in an amount equal to or more than 1/2 of the Cu content. A specific upper limit of the Cu content is preferably 1.5% by mass or less, more preferably 1.0% by mass or less. The lower limit of the Cu content is not particularly limited, and may be set to, for example, 0.01% or more.

(Ni: less than 2.5% in Total of One Kind or Plurality of Kinds Selected from Mn, Ni, or Cu, or One Kind or Plurality of Kinds Selected from Mn, Ni, Co, Pt, Pb, Au, or Cu)

Ni allows the steel sheet to be increased in electric resistance and reduced in iron loss as in Mn. Furthermore, Ni can lower the $Ar_3$ transformation point, to allow for refinement of the crystal grain due to phase transformation in the chemical composition of the non-oriented electromagnetic steel sheet according to the embodiment. However, a too high Ni content not only increases the product cost due to Ni which is expensive, but also decreases the saturated magnetic flux density and prevents the steel sheet from being increased in magnetic flux density, and therefore these are preferably considered in design of the content. Accordingly, the Ni content is restricted to less than 2.5%. A specific upper limit of the Ni content is preferably 1.0% by mass or less, more preferably 0.7% by mass or less. The lower limit of the Ni content is not particularly limited, and may be 0% or may be set to, for example, 0.01% or more.

(Mo: from 0.00% to less than 2.50%)

Mo is an element which can lower the $Ar_3$ transformation point, to allow for refinement of the grain size in a hot-rolled sheet due to phase transformation, in the chemical composition of the non-oriented electromagnetic steel sheet according to the embodiment. Accordingly, Mo may be, if necessary, contained, and is preferably contained at 0.10% or more. In this regard, Mo contained at 2.50% or more remarkably decreases cold processability, whereby the Mo content is set to less than 2.50%.

(Cr: from 0.00% to less than 2.50%)

Cr not only is an element which can lower the $Ar_3$ transformation point, to allow for refinement of the grain size in a hot-rolled sheet due to phase transformation, in the chemical composition of the non-oriented electromagnetic steel sheet according to the embodiment, but also has the effect of not only intensity adjustment, but also enhancements in high-frequency characteristics, in addition to corrosion resistance. Accordingly, Cr may be, if necessary, contained, and is preferably contained at 0.10% or more. In this regard, Cr excessively contained not only causes the effect to be saturated, thereby resulting in an increase in raw material cost, but also decreases the saturated magnetic flux density, thereby preventing the steel sheet from being increased in magnetic flux density. Therefore, the Cr content is set to less than 2.50%.

(Ti: from 0.000% to 0.005%)

Ti is present as a solid solution or TiN, thereby allowing recrystallization to be suppressed and contributing to refinement of the austenite grain size. Accordingly, Ti may be, if necessary, contained, and is preferably contained at 0.001% or more. In this regard, a Ti content of more than 0.005% causes production of various precipitates such as TiN, TiS, and TiC, and degrades iron loss characteristics, whereby the Ti content is set to 0.005% or less.

(Nb: from 0.000% to 0.005%)

Nb is present as a solid solution or NbN, thereby allowing recrystallization to be suppressed and contributing to refinement of the austenite grain size. Accordingly, Nb may be, if necessary, contained, and is preferably contained at 0.001% or more. In this regard, a Nb content of more than 0.005% causes production of various precipitates such as NbN and NbC and degrades iron loss characteristics, whereby the Nb content is set to 0.005% or less.

(Sn: from 0.000% to 0.400%, Sb: from 0.000% to 0.400%, P: from 0.000% to 0.400%)

Sn and Sb improve a texture after cold rolling and recrystallization and enhance the magnetic flux density. Therefore, these elements may be, if necessary, contained, but may be excessively included to cause embrittlement of steel. Accordingly, the Sn content and the Sb content are each set to 0.400% or less. P may be contained in order to ensure the hardness of the steel sheet after recrystallization, but may be excessively included to cause embrittlement of steel. Accordingly, the P content is set to 0.400% or less.
In a case in which further effects such as magnetic characteristics are imparted, one kind or a plurality of kinds selected from the group consisting of 0.020% to 0.400% of Sn, 0.020% to 0.400% of Sb, and 0.020% to 0.400% of P is preferably contained.

(One Kind or Plurality of Kinds Selected from the group consisting of Mg, Ca, Sr, Ba, Ce, La, Nd, Pr, Zn, and Cd: from 0.0000% to 0.0100% in Total)

Mg, Ca, Sr, Ba, Ce, La, Nd, Pr, Zn, and Cd are reacted with S in molten steel during casting of the molten steel, to produce a precipitate of sulfide or oxysulfide, or both thereof. Hereinafter, Mg, Ca, Sr, Ba, Ce, La, Nd, Pr, Zn, and Cd may be collectively referred to as "coarse precipitate-production element". The grain size of a precipitate of the coarse precipitate-production element is from about 1 $\mu$m to 2 $\mu$m, and is much larger than the grain size (about 100 nm) of a fine precipitate of MnS, TiN, AlN, TiC, NbC, or the like. Therefore, such a fine precipitate is attached to the precipitate of the coarse precipitate-production element, and hardly inhibits recrystallization and crystal grain growth in annealing such as intermediate annealing. In order to sufficiently obtain these effects, the total of the coarse precipitate-production element is preferably 0.0005% or more. However, in a case in which the total of these elements exceeds 0.0100%, the total amount of sulfide or oxysulfide, or both thereof is excess, and recrystallization and crystal grain growth in annealing such as intermediate annealing are inhibited. Accordingly, the total content of the coarse precipitate-production element is set to 0.0100% or less.
In the embodiment, the balance other than the above in the chemical composition may be Fe and impurities. The impurities mean any steel raw material and/or any element incorporated in the course of steelmaking. Any other element may be further contained instead of some Fe as long as the effects of the disclosure are not lost. For example, 0.10% or less of each of B, O, V, Bi, W, and Y may be contained. The total of the whole impurities is preferably 5.00% or less, more preferably 1.00% or less.
The chemical composition is determined by the following method.
The chemical composition may be measured by a common analysis method of steel. For example, the chemical composition may be measured with ICP-AES (Inductively Coupled Plasma-Atomic Emission Spectrometry). Specifically, the chemical composition is identified by measurement of a test piece collected from the steel sheet with a predetermined measurement apparatus under conditions based on the calibration made in advance. C and S may be measured with a combustion infrared absorption method, and N may be measured with an inert gas fusion-thermal conductivity method. O may be measured with an inert gas fusion-nondispersive infrared absorption method.
In a case in which an insulation film is present on a surface, the film may be mechanically removed by a minitor or the like and then the resultant may be subjected to analysis.
Next, a metal structure of the non-oriented electromagnetic steel sheet according to the embodiment is described. While the detail of the production method is described below, the non-oriented electromagnetic steel sheet according to the embodiment has a chemical composition which can allow for the occurrence of $\alpha$-$\gamma$ transformation.
Next, the thickness of the non-oriented electromagnetic steel sheet according to the embodiment is described. The sheet thickness of the non-oriented electromagnetic steel sheet according to the embodiment is 0.50 mm or less. A preferred sheet thickness of the non-oriented electromagnetic steel sheet according to the embodiment is from 0.10 to 0.50 mm. In general, a thinner sheet thickness leads to less iron loss, but a lower magnetic flux density. In view of this, a sheet thickness of 0.10 mm or more leads to less iron loss and a higher magnetic flux density. A sheet thickness of 0.50 mm or less can allow less iron loss to be kept. A more preferred lower limit value of the sheet thickness is 0.20 mm, and a still more preferred lower limit value thereof is 0.30 mm.
The random intensity ratio of {411}<011> at the 1/2 sheet thickness part of the non-oriented electromagnetic steel sheet according to the embodiment is 4.0 or more.

The random intensity ratio of {411}<011> at the 1/2 sheet thickness part is a "random intensity ratio" of the non-oriented electromagnetic steel sheet after final annealing.

A random intensity ratio of {411}<011> at the 1/2 sheet thickness part, of less than 4.0, causes development of a crystal grain having the {111} plane orientation after final annealing, and cannot provide sufficient magnetic characteristics.

The upper limit of the random intensity ratio of {411}<011> at the 1/2 sheet thickness part is not particularly limited, and is, for example, 30.0 or less.

In a case in which the random intensity ratio of {411}<148> at the 1/2 sheet thickness part is 5.0 or more, a {411}<148> orientation is developed and thus the random intensity ratio of {411}<011> at the 1/2 sheet thickness part does not satisfy 4.0 or more.

Hereinafter, unless particularly noted, the "random intensity ratio of {411}<011> at the 1/2 sheet thickness part" is also simply referred to as "random intensity ratio of {411}<011>".

The random intensity ratio generally means the ratio with respect to the X-ray integral intensity of a sample in which the accumulation state of the crystal orientation is random. The ratio is a numerical value obtained by measuring the X-ray intensities of a reference sample having no accumulation in a specified orientation and a sample material in the same conditions by an X-ray diffraction method or the like, and dividing the resulting X-ray intensity of the sample material by the resulting X-ray intensity of the reference sample. The numerical value can be determined from a crystal orientation distribution function (Orientation Distribution Function, referred to as ODF.) representing a three-dimensional texture, calculated based on a plurality of pole figures among {110}, {100}, {211}, and {310} pole figures measured by X-ray diffraction, according to a series expansion method. In this regard, the same ODF can also be determined from the crystal orientation data obtained by measurement with EBSD (Electron Back Scattering Diffraction), whereby a value obtained by measurement with EBSD, as described below, is to be used as the value of the random intensity ratio in the disclosure.

FIG. 1 illustrates ODF of a $\varphi2 = 45°$ cross section, in which one example of the crystal orientation in the disclosure is displayed. While {411}<011> is expressed by a point of $\varphi1 = 0°$, $\Phi = 20°$, a measurement error may occur due to test piece processing and/or sample setting and thus a maximum value in the range of $\varphi1 = $ from 0 to 5°, $\Phi = $ 15 to 25°, illustrated by a shaded area in the drawing, is adopted.

ODF is also used in orientation display of a crystal structure low in symmetry and thus is generally expressed by $\varphi1 = $ from 0 to 360°, $\Phi = $ from 0 to 180°, $\varphi2 = $ from 0 to 360°, and an individual orientation is displayed by (hkl)[uvw]. However, a bcc crystal structure high in symmetry is directed in the disclosure, and thus $\Phi$ and $\varphi2$ are expressed in the range of from 0 to 90°. While $\varphi1$ is changed in the range thereof by whether or not symmetry due to deformation is considered during calculation performed, $\varphi1$ is expressed by $\varphi1 = $ from 0 to 90° in consideration of symmetry in the disclosure. In other words, a system is selected in which the average value of the same orientation in $\varphi1 = $ from 0 to 360° is expressed on ODF of from 0 to 90°.

Next, measurement conditions in EBSD are described. The steel sheet is polished up to a predetermined position in the sheet thickness direction, by mechanical polishing, chemical polishing, or the like, and buffed and thus finished into a mirror surface, and thereafter the strain is removed by electropolishing or chemical polishing and at the same time adjusted so that the 1/2 sheet thickness part corresponds to a measurement surface. It is here difficult to accurately locate the measurement surface at a predetermined sheet thickness position, and thus a sample may be produced so that the measurement surface is located within 3% with respect to the sheet thickness with a target position as the center. The measurement range is a range of 1 mm or more in each of the rolling direction and the rolling width direction. The measurement interval is not particularly defined, and is desirably regulated so that the number of measurement points is 50000 points or more.

The detailed conditions in creation of ODF from the data obtained in EBSD, with analysis software OIM Analysis manufactured by EDAX/TSL, are shown below.

· Series Rank (L): 16
· Gaussian Half-Width [degrees]: 5
· Sample Symmetry: Orthotropic (Rolled sheet)
· Bunge Euler Angles: $\varphi1 = $ from 0 to 90°, $\Phi = $ from 0 to 90°, $\varphi2 = 45°$

Next, magnetic characteristics of the non-oriented electromagnetic steel sheet according to the embodiment are described. The non-oriented electromagnetic steel sheet according to the embodiment is most excellent in magnetic characteristics in a 45° direction among three directions in which the angles formed with the rolling direction are 0°, 45°, and 90°. In the embodiment, the angle formed with the rolling direction means the angle formed with the rolling direction in the sheet surface. In the embodiment, magnetic characteristics in a 45° direction correspond to the average value of magnetic characteristics with respect to two directions forming +45° and -45° with respect to the rolling direction.

In a case in which the magnetic flux density of the non-oriented electromagnetic steel sheet according to the embodiment is measured, the magnetic flux density $B_{50}$ in a 45° direction with respect to the rolling direction is preferably 1.75 T or more. The non-oriented electromagnetic steel sheet according to the embodiment is high in magnetic flux density in a 45° direction with respect to the rolling direction, is small in-plane anisotropy, and achieves a high magnetic flux density even on the all-direction average.

In the non-oriented electromagnetic steel sheet according to the embodiment, in a case in which the value of the magnetic flux density $B_{50}$ in the rolling direction is $B_{50L}$, the value of the magnetic flux density $B_{50}$ in a 45° direction with respect to the rolling direction is $B_{50D}$, and the value of the magnetic flux density $B_{50}$ in a 90° direction with respect to the rolling direction is $B_{50C}$, an anisotropy of the magnetic flux densities is observed in which $B_{50D}$ is relatively high and $B_{50L}$ and $B_{50C}$ are relatively low.

The non-oriented electromagnetic steel sheet according to the embodiment more preferably satisfies the following Formula (2) with the average value of $B_{50D}$, $B_{50L}$, and $B_{50C}$.

$$|B_{50D}-(B_{50L} + B_{50C})/2| \leq 0.3 \ldots (2)$$

The value of the left member in Formula (2) is preferably 0.2 or less, still more preferably 0.1 or less.

The lower limit of the value of the left member in Formula (2) is not particularly limited, and is preferably zero.

Measurement of the magnetic flux density can be performed with single plate magnetic measurement equipment by cutting out a 55-mm square sample in the direction at 45°, 0°, or the like with respect to the rolling direction.

Next, one example of a method of producing the non-oriented electromagnetic steel sheet according to the embodiment is described. The non-oriented electromagnetic steel sheet according to the embodiment is obtained by a production method including a hot rolling step, a cold rolling step, an intermediate annealing step, a skin pass rolling step, and a final annealing step.

Hereinafter, preferred conditions of each step are described.

Hereinafter, the $Ar_3$ temperature in the embodiment is the transformation temperature $Ar_3$ (°C) defined by the above Formula (1).

(Hot-Rolling Step)

In the hot rolling step, hot rolling of a steel material satisfying the above chemical composition is carried out, to produce a hot-rolled steel sheet. The hot rolling step includes a heating process and a rolling process.

The steel material is, for example, a slab produced by usual continuous casting, and the steel material of the above composition is produced by a well-known method. For example, molten steel is produced in a converter furnace, an electric furnace, or the like. The molten steel produced is secondary-refined with a degassing installation or the like and thus formed into molten steel having the above chemical composition (the chemical composition is not substantially changed in subsequent steps). The molten steel is used and the slab is cast by a continuous casting method or an ingot-making method. The slab cast produced may be cogged.

In the heating process, the steel material having the above chemical composition is preferably heated to from 1000 to 1200°C. Specifically, the steel material is inserted into a heating furnace or a soaking furnace and heated in the furnace. The retention time at the above heating temperature in the heating furnace or the soaking furnace is not particularly limited, and is, for example, from 30 to 200 hours.

In the rolling process, the steel material heated in the heating process is rolled multiple passes, to produce a hot-rolled steel sheet. Here, the "pass" means that the steel sheet passes through one rolling stand having a pair of work rolls and receives screw-down. In the hot rolling, for example, tandem rolling may be performed with a tandem rolling machine including a plurality of rolling stands aligned (each rolling stand having a pair of work rolls), to perform multiple-pass rolling, or reverse rolling with a pair of work rolls may be performed, to perform multiple-pass rolling. It is preferable from the viewpoint of productivity to perform multiple-pass rolling with a tandem rolling machine.

Rolling in the rolling process (rough rolling and finishing rolling) provides hot rolling by heating the above steel material. The steel material is, for example, a slab produced by usual continuous casting. The slab is heated at the $Ar_3$ temperature or more and in a temperature range in which the steel structure serves as a γ-phase. Hot rolling is started in a temperature range in which the steel structure serves as a γ-phase (hereinafter, this temperature range may be designated as "γ-region"), performed in the γ-region except for necessary some passes including the final pass of finishing rolling, performed in a temperature range in which an α-phase is present in the steel structure (hereinafter, this temperature range may be designated as "a-region") necessary some passes including the final pass of finishing rolling, and thus completed. In general, the former stage to the middle stage of rough rolling and finishing rolling is performed in the γ-region, and the latter stage of finishing rolling is performed in the α-region. In the embodiment, rolling reduction in the temperature range of from the $Ar_3$ temperature to $Ar_3$ + 20°C immediately before final rolling in the α-region is set to 10% or more. Furthermore, rolling reduction in the temperature range of from the finishing rolling temperature FT to less than the $Ar_3$ temperature is set to 15% or more in total in consideration of also the case of multiple-pass rolling.

The finishing rolling temperature FT refers to the surface temperature of the hot-rolled steel sheet immediately after finishing rolling.

The lower limit of the finishing rolling temperature FT is not particularly limited, and is set to, for example, $Ar_3$ temperature - 100°C or more.

Rolling in the temperature range more than $Ar_3$ + 20°C immediately before final rolling in the $\alpha$-region has almost no influence on the grain size of a processed $\gamma$-grain before phase transformation, leads to formation of a coarse processed $\alpha$-grain after transformation, and is irrelevant to accumulation in {411}<011> in a final product.

In a case in which the rolling ratio in the temperature range of from the $Ar_3$ temperature to $Ar_3$ + 20°C immediately before final rolling in the $\alpha$-region is less than 10%, accumulation of strain in a processed $\gamma$-grain before phase transformation is lacked and a coarse processed $\alpha$-grain is formed, to hardly result in the occurrence of accumulation in {411}<011> in a final product. The rolling ratio in the temperature range of from the $Ar_3$ temperature to $Ar_3$ + 20°C is preferably set to 15% or more, more preferably 20% or more. The upper limit in total rolling reduction is not defined, but an upper limit of more than 40% causes the load of a rolling machine to be too high and thus the upper limit is preferably set to 40%.

In a case in which the total of rolling reduction in the temperature range of from the finishing rolling temperature FT to less than the $Ar_3$ temperature in the final $\alpha$-region is less than 15%, processing strain in the $\alpha$-region cannot be accumulated in a processed $\alpha$-grain after phase transformation from a processed $\gamma$-grain, and accumulation in the {411}<011> crystal orientation in a final product hardly occurs. Rolling reduction in the temperature range of from the finishing rolling temperature FT to less than the $Ar_3$ temperature is preferably 20% or more, more preferably 25% or more. The upper limit in total rolling reduction is not defined, but an upper limit of more than 40% causes the load of a rolling machine to be too high and thus the upper limit is preferably set to 40%.

In the embodiment, the rolling reduction RR0 in hot rolling is defined as follows.

Rolling reduction RR0 (%) = (1 - Sheet thickness after rolling in relevant temperature range in hot rolling/Sheet thickness before rolling in relevant temperature range in hot rolling) $\times$ 100

The lower temperature in rolling in the $\alpha$-region is not particularly limited, and is preferably set to 600°C or more because a decrease in rolling temperature causes an increase in load of a rolling machine.

The above rolling temperature is considered to be varied above and below the determination temperature defined ($Ar_3$ temperature, or $Ar_3$ + 20°C), during processing in a rolling pass, due to competition between a decrease in temperature by roll contact and a cooling lubricant and an increase in temperature by processing. The embodiment deals with such a circumstance, as follows.

It is assumed that the temperature at an inlet of a rolling pass is TPI (°C), the sheet thickness at the inlet is TCI (mm), the temperature at an outlet of the rolling pass is TPO (°C), and the sheet thickness at the outlet is TCO (mm), and furthermore the change in sheet thickness and the change in temperature in the rolling pass are simply changed with having a linear relation. In other words, it is assumed that, in a case in which the sheet thickness and the temperature at a specific point in a rolling pass are respectively TCa (mm) and TPa (°C), the following Formula is always satisfied during the rolling pass.

$$(TCa\text{-}TCO)/(TCI\text{-}TCO) = (TPa\text{-}TPO)/(TPI\text{-}TPO)$$

Thus, even in the case of attainment of the determination temperature defined ($Ar_3$ temperature, or $Ar_3$ + 20°C) in the present production method, during a rolling pass, the sheet thickness at this point of time can be determined.

In other words, the sheet thickness TCa (mm) at the point of time of the attainment of a specified temperature TPa (°C) during a rolling pass can be obtained by

$$TCa\text{=}TCO + (TCI\text{-}TCO) \times (TPa\text{-}TPO)/(TPI\text{-}TPO).$$

It is to be noted here that the above assumption is made by also supposing that the temperature at an outlet of a rolling pass is higher than the temperature at an inlet thereof. In other words, it is determined that, even in a situation in which a steel sheet exhibiting a temperature TPI at the inlet of the pass, of less than the $Ar_3$ temperature, is raised in temperature due to generation of heat by processing in the pass and is discharged at a temperature TPO at the outlet, of the $Ar_3$ temperature or more, rolling in the $\gamma$-region (the temperature range of from the $Ar_3$ temperature to $Ar_3$ + 20°C), necessary for the disclosure, is provided at a later stage of the pass.

It is also considered that the variation in temperature, with the $Ar_3$ temperature being sandwiched, occurs over multiple passes. In such a case, in the embodiment, rolling conditions in the $\alpha$-region are directed to "final rolling processing in the $\alpha$-region". Rolling conditions in the $\gamma$-region are directed to "rolling processing in the $\gamma$-region, immediately before the "final rolling processing in the $\alpha$-region"". In other words, in a case in which the rolling temperature after the initiation of hot rolling in the γ-region is varied like γ-region (initiation of heat rolling) → α-region 1 → γ-region 1 → α-region 2 → γ-region 2 → α-region 3 (end of heat rolling) and also in a case in which the α-region 3 and the γ-region 2 are matched with conditions in the embodiment, the steel sheet of the disclosure can be obtained.

The rolling temperature in each pass can be measured with, for example, a temperature measuring instrument disposed at an inlet or an outlet of a rolling stand in which screw-down of a target pass is to be performed. It is not necessary to dispose a temperature measuring instrument at each of all inlets and outlets of a rolling stand in which the temperature range is in the range of the disclosure, and the rolling temperature of the rolling stand on the way may be calculated by calculation from the actual temperatures of respective temperature measuring instruments appropriately disposed in front of and behind the inlets and the outlets. It is rather usual in current hot rolling to perform control with the temperature by such calculation.

Thereafter, hot-rolled sheet annealing is not performed and the hot-rolled steel sheet is rolled up. The temperature during rolling up is preferably from more than 250°C to 600°C. The hot-rolled steel sheet after hot rolling is rolled up at from more than 250°C to 600°C, to obtain the effect of enabling a crystalline texture before cold rolling to be refined and enabling a {411}<011> crystal orientation excellent in magnetic characteristics to be enriched during bulging. The temperature during rolling up is more preferably from 400°C to 500°C, still more preferably from 400°C to 480°C.

(Cold-Rolling Step)

In the cold rolling step, the hot-rolled steel sheet after the cooling step is cold-rolled, to obtain a cold-rolled steel sheet. Specifically, the hot-rolled steel sheet is cold-rolled through acid pickling after hot rolling. The rolling reduction in cold rolling is preferably set to from 80% to 92%. As the rolling reduction is higher, subsequent bulging more allows a crystal grain having a {411}<011> crystal orientation to be easily grown, but more easily leads to degradation in sheet shape and makes operating difficult.

(Intermediate Annealing Step)

In the intermediate annealing step, the cold-rolled steel sheet is subjected to intermediate annealing. In the embodiment, the intermediate annealing temperature is controlled to from 700°C to less than 900°C. An intermediate annealing temperature of less than 700°C causes insufficient crystal grain growth, and hardly allows for progression of accumulation in a {411} <011> crystal orientation even by application of skin pass rolling and final annealing described below. An intermediate annealing temperature of 900°C or more causes excess crystal grain growth and accordingly hardly allows for progression of accumulation in a {411}<011> crystal orientation even by application of skin pass rolling and final annealing described below. In a case in which the intermediate annealing temperature is too low to provide sufficient recrystallization, a crystal grain having a {411}<011> crystal orientation is inhibited from being grown even by application of skin pass rolling and final annealing described below. Accordingly, the intermediate annealing temperature is preferably set to from 700°C to less than 900°C, more preferably from 700°C to less than 800°C. The temperature described here is set as a promise for continuous annealing, and the intermediate annealing time is preferably in the range of from 5 to 120 seconds. Such annealing temperature range and annealing time range are considered to correspond to suitable conditions for allowing a {411}<011> oriented grain more than slightly generated until the cold rolling step to be formed into a state in which the grain is moderately grown by bulging and strain-induced grain growth easily occurs by application of skin pass rolling and final annealing described below.

(Skin Pass Rolling Step)

In the skin pass rolling step, the steel sheet after the intermediate annealing step is subjected to skin pass rolling. In a case in which skin pass rolling and annealing are performed in the state of {411}<011> enriched by bulging, as described above, a crystal grain having a {411}<011> crystal orientation is further grown. The reason for this is because there is a tendency for skin pass rolling to allow strain to be easily accumulated in a crystal grain having a {411}<011> crystal orientation and allow strain to be hardly accumulated in a crystal grain belonging to one having an orientation group including a {111} plane orientation called γ-fiber such as {111}<112> or {111}<110>, and such a crystal grain having a {411} <011> crystal orientation, with less strain, encroaches on such a γ-fiber oriented grain with the difference in strain, as driving force, in subsequent annealing. This encroachment phenomenon occurring with the difference in strain, as driving force, is called strain-induced grain boundary migration (hereinafter, SIBM). The rolling reduction in skin pass rolling is preferably set to from 5.0% to less than 20.0%. In a case in which the rolling reduction is less than 5%, the amount of strain is too small to allow for the occurrence of strain-induced grain boundary migration (hereinafter, SIBM) in subsequent annealing, and to expand a crystal grain having a {411}<011> crystal orientation. In this regard, in a case in which the rolling reduction is 20% or more, the amount of strain is so large that recrystallization nucleation (hereinafter, Nucleation) occurs in which a new crystal grain is generated in a crystal grain having a γ-fiber orientation. Since a grain to be generated mostly corresponds to a crystal grain having a $\gamma$-fiber orientation in this Nucleation, magnetic characteristics are deteriorated. The rolling reduction in skin pass rolling is preferably set to from 5% to 15% from the viewpoint of allowing for a higher average magnetic flux density and a smaller in-plane anisotropy.

In a case in which the non-oriented electromagnetic steel sheet is allowed to have the above strain distribution, the rolling reductions in cold rolling and skin pass rolling are preferably adjusted so that $71.0 < RR1 - RR2 < 75.0$ is satisfied in a case in which the rolling reduction (%) in cold rolling is RR1 and the rolling reduction (%) in skin pass rolling is RR2.

The rolling reduction RR1 (%) in cold rolling is defined as follows.

Rolling reduction RR1 (%) = (1 - Sheet thickness after final pass rolling in cold rolling/Sheet thickness before first pass rolling in cold rolling) $\times$ 100

The rolling reduction RR2 (%) in skin pass rolling is defined as follows.

Rolling reduction RR2 (%) = (1 - Sheet thickness after final pass rolling in skin pass rolling/Sheet thickness before first pass rolling in skin pass rolling) $\times$ 100

(Final Annealing Step)

In the final annealing step, the steel sheet after skin pass rolling is subjected to final annealing. This final annealing generates SIBM with the difference in strain, as driving force, with respect to each crystal orientation due to skin pass rolling, preferentially grows a {411}<011> oriented grain as an object of the disclosure, and increases the degree of accumulation in a {411}<011> orientation of the steel sheet. Such annealing conditions can be appropriately set with confirmation of generation of SIBM, by those skilled in the art, and are not particularly limited, and examples can include annealing at 800°C for 2 hours. The annealing temperature may be set to, for example, a temperature of from 750°C to 900°C, a temperature of from 800°C to 900°C, or a temperature of from 850°C to 900°C.

The non-oriented electromagnetic steel sheet according to the embodiment can be produced as above.

This final annealing can be performed after skin pass rolling with, for example, a steel sheet coil from a steel sheet manufacturer, or a cut steel sheet. Alternatively, such final annealing can also be performed with a core shape obtained after shipping without final annealing performed after skin pass rolling, processing of a steel sheet into a predetermined shape serving as a motor core in a motor manufacturer, and layering of the resultant. The latter case can be performed also as "strain removal annealing" commonly performed with respect to a motor core in a motor manufacturer.

In a case in which final annealing is performed in a steel sheet manufacturer and shipping is made, a motor manufacturer can achieve favorable motor characteristics by use of the steel sheet of the disclosure. In a case in which a steel sheet in which steps to skin pass rolling are terminated is shipped by a steel sheet manufacturer and this steel sheet is processed into a motor core by a motor manufacturer and then is subjected to final annealing as strain removal annealing, favorable motor characteristics can also be achieved by use of the steel sheet of the disclosure.

Such final annealing may also be performed as a heat treatment to be performed two or more times in both a steel sheet manufacturer and a motor manufacturer. The heat treatment after a skin pass can be adjusted, to adjust the amount of the remaining strain, the crystal grain size, and the degree of development of a {411}<011> orientation. A steel sheet in the state of being small in amount of the remaining strain or being relatively small in crystal grain size is used particularly as a non-oriented electromagnetic steel sheet for a rotor core and thus is suitable also in order to suppress deformation due to centrifugal force associated with core rotation. In this regard, a steel sheet in which strain is sufficiently released and the crystal grain size is made coarse is used particularly as a non-oriented electromagnetic steel sheet for a stator core and thus is suitable in order to suppress iron loss.

An iron steel member formed from the non-oriented electromagnetic steel sheet according to the embodiment is applied to, for example, an iron core (motor core) for a rotating electrical machine. In this case, an individual flat-shaped thin sheet is cut out from the non-oriented electromagnetic steel sheet according to the embodiment and such a flat-shaped thin sheet is appropriately layered, to produce an iron core used in a rotating electrical machine. This iron core, to which a non-oriented electromagnetic steel sheet having excellent magnetic characteristics is applied, is thus kept low in iron loss and a rotating electrical machine having an excellent torque is realized. An iron steel member formed from the non-oriented electromagnetic steel sheet according to the embodiment can be applied to a product other than the iron core for a rotating electrical machine, for example, an iron core for a linear motor, a static device (a reactor or a transformer), or the like.

EXAMPLES

Next, a non-oriented electromagnetic steel sheet according to an embodiment of the disclosure is specifically described with reference to Examples. Examples shown below are merely illustrative for such a non-oriented electromagnetic steel sheet according to an embodiment of the disclosure, and the non-oriented electromagnetic steel sheet according to the disclosure is not intended to be limited to the following Examples.

Ingots of components shown in Table 1 below were produced by casting molten steel. In Table 1, the column "Co and the like" indicates the contents of Co, Pt, Pb, and Au. Thereafter, the ingots produced were each subjected to a hot rolling step, a cold rolling step, an intermediate rolling step, a skin pass rolling step, and a final annealing step in conditions shown in Table 2.

After hot rolling, hot-rolled sheet annealing was not performed, and a hot-rolled steel sheet was rolled up at a temperature of 500°C.

In the final annealing step, annealing was performed at an annealing temperature T2 shown in Table 2, for 2 hours.

The following characteristics were investigated by the above-mentioned methods.

· Transformation temperature $Ar_3$ (°C)
· Sheet thickness
· Random intensity ratio of {411}<011> at 1/2 sheet thickness part, after final annealing · Magnetic flux density $B_{50L}$ in rolling direction
· Magnetic flux density $B_{50D}$ in 45° direction with respect to rolling direction · Magnetic flux density $B_{50C}$ in 90° direction with respect to rolling direction

The following evaluation was also performed.

(Rollability)

The rollability was evaluated as follows.

In a case in which a position of 10 m from a tip top part) in the longitudinal direction of the outermost periphery of a cold-rolled sheet coil, in the longitudinal direction, a position (middle part) reaching a length of 1/2 with respect to the entire length in the longitudinal direction of the coil, from the tip in the longitudinal direction of the outermost periphery of the coil, and a position of 10 m from a tip (bottom part) in the longitudinal direction of the innermost periphery of the coil, in the longitudinal direction, were each set as the center and a region was set by a length of 1 m from the center in the longitudinal direction, a case in which a crack of 1 cm or more in length occurred at two or more locations in total on each of both end surfaces in the sheet width direction of the coil was rated as "N" and any case other than such a case was rated as "Y".

In the present Examples, the cold-rolled sheet coil was adopted as an evaluation object of rollability. In the case of evaluation of a steel sheet cut out from the cold-rolled sheet coil, both end surfaces in the sheet width direction may be each observed at three or more different positions in the longitudinal direction (rolling direction) of the steel sheet, in the same manner as described above. For example, observation may be performed in the range of about 1/10 of the whole length in the longitudinal direction of the steel sheet with, as the center, each of positions of about 1/10, 1/2, and 9/10 with respect to the length in the longitudinal direction of the steel sheet, and the whole length in the longitudinal direction of the steel sheet may be here set to 1 m or more.

[Table 1-1]

| Type of steel | Chemical composition (balance: Fe and impurities) | | | | | | | | | |
|---|---|---|---|---|---|---|---|---|---|---|
| | C | Si | sol.Al | S | N | P | Mn | Cu | Ni | Total of Mn, Cu, and Ni |
| | [% by mass] | [% by mass] | [% by mass] | [% by mass] | [% by mass] | [% by mass] | [% by mass] | [% by mass] | [% by mass] | [% by mass] |
| A01 | 0.0015 | 3.10 | 0.30 | 0.0021 | 0.0023 | 0.100 | 0.50 | 0.02 | | 0.52 |
| A02 | 0.0032 | 3.20 | 0.30 | 0.0051 | 0.0012 | 0.010 | 2.30 | 0.02 | | 2.32 |
| A03 | 0.0013 | 3.10 | 0.30 | 0.0021 | 0.0011 | 0.100 | 3.40 | 0.02 | | 3.42 |
| A04 | 0.0013 | 3.10 | 0.30 | 0.0028 | 0.0022 | 0.100 | 1.50 | 0.50 | 0.30 | 2.30 |
| A05 | 0.0036 | 3.10 | 0.30 | 0.0021 | 0.0035 | 0.020 | 2.00 | 0.50 | 0.30 | 2.80 |
| A06 | 0.0021 | 3.00 | 0.30 | 0.0066 | 0.0052 | 0.020 | 0.20 | 1.20 | 0.70 | 2.10 |
| A07 | 0.0067 | 3.10 | 0.30 | 0.0016 | 0.0022 | 0.100 | 0.70 | 1.20 | 0.70 | 2.60 |

(continued)

| Type of steel | C | Si | sol.Al | S | N | P | Mn | Cu | Ni | Total of Mn, Cu, and Ni |
|---|---|---|---|---|---|---|---|---|---|---|
| | [% by mass] | [% by mass] | [% by mass] | [% by mass] | [% by mass] | [% by mass] | [% by mass] | [% by mass] | [% by mass] | [% by mass] |
| A08 | 0.0048 | 3.10 | 0.30 | 0.0021 | 0.0018 | 0.015 | 2.30 | 0.02 | | 2.32 |
| A09 | 0.0013 | 3.90 | 0.30 | 0.0027 | 0.0035 | 0.100 | 2.20 | 0.02 | | 2.22 |
| Al0 | 0.0021 | 3.10 | 0.30 | 0.0016 | 0.0011 | 0.030 | 2.30 | 0.02 | | 2.32 |
| A11 | 0.0016 | 2.80 | 0.30 | 0.0045 | 0.0019 | 0.082 | 2.40 | 0.02 | | 2.42 |
| A12 | 0.0042 | 3.10 | 0.30 | 0.0021 | 0.0033 | 0.130 | 2.30 | 0.02 | | 2.32 |
| A13 | 0.0023 | 3.10 | 0.30 | 0.0067 | 0.0011 | 0.100 | 1.90 | 0.02 | | 1.92 |
| B01 | 0.0026 | 1.70 | 0.01 | 0.0018 | 0.0026 | 0.050 | 0.50 | 0.02 | | 0.52 |
| B02 | 0.0032 | 1.60 | 0.01 | 0.0022 | 0.0019 | 0.010 | 2.30 | 0.02 | | 2.32 |
| B03 | 0.0023 | 1.60 | 0.01 | 0.0018 | 0.0019 | 0.080 | 2.90 | 0.02 | | 2.92 |
| B04 | 0.0023 | 2.50 | 0.06 | 0.0008 | 0.002 | 0.010 | 0.90 | 0.03 | | 0.93 |
| B05 | 0.0032 | 3.10 | 0.10 | 0.003 | 0.0023 | 0.002 | 1.20 | 0.02 | | 1.22 |
| B06 | 0.0026 | 1.60 | 0.30 | 0.0012 | 0.0092 | 0.010 | 1.80 | 0.20 | 0.06 | 2.06 |
| B07 | 0.0089 | 1.50 | 0.80 | 0.0023 | 0.0053 | 0.020 | 2.40 | 0.02 | | 2.42 |

[Table 1-2]

| Type of steel | Co and the like | Total of Mn, Cu, Ni, Co, Pt, Pb, and Au | Ti | Nb | Mo | Cr | Sn | Sb | Mg and the like | Ar$_3$ |
|---|---|---|---|---|---|---|---|---|---|---|
| | [% by mass] | [% by mass] | [% by mass] | [% by mass] | [% by mass] | [% by mass] | [% by mass] | [% by mass] | [% by mass] | °C |
| A01 | | 0.52 | | | | | - | - | - | 1112 |
| A02 | | 2.32 | 0.0028 | | | | - | - | - | 873 |
| A03 | | 3.42 | | | | | - | - | - | 764 |
| A04 | | 2.30 | | 0.0031 | | | - | 0.01 | - | 921 |
| A05 | | 2.80 | | | | | 0.05 | - | - | 837 |
| A06 | Pt:0.01Au:0.01 | 2.32 | | | | 0.1 | - | - | - | 943 |
| A07 | | 2.60 | | | | | - | - | - | 913 |
| A08 | | 2.32 | | | | | - | - | Mg:0.005 | 871 |
| A09 | | 2.22 | | | | | - | - | Mg:0.002, Pr:0.002 | 935 |
| A10 | | 2.32 | | | | | - | - | Ca:0.002, Ce:0.002 | 876 |
| A11 | Co:0.05 | 2.47 | | | | | - | - | Sr:0.002, Cd:.0002 | 869 |

(continued)

| Chemical composition (balance: Fe and impurities) | | | | | | | | | | |
|---|---|---|---|---|---|---|---|---|---|---|
| Type of steel | Co and the like | Total of Mn, Cu, Ni, Co, Pt, Pb, and Au | Ti | Nb | Mo | Cr | Sn | Sb | Mg and the like | $Ar_3$ |
| A12 | Pb:0.02 | 2.34 | | | | | - | - | Ba:0.002, Zn:0.002 | 904 |
| A13 | | 1.92 | | | | | - | - | La:0.002,Nd:0.002 | 944 |
| B01 | | 0.52 | | | 0.4 | | - | - | - | 980 |
| B02 | | 2.32 | | | | | 0.02 | - | - | 797 |
| B03 | | 2.92 | | | | | - | | - | 745 |
| B04 | | 0.93 | | | | | | | | 998 |
| B05 | | 1.22 | 0.0012 | | | | | | | 983 |
| B06 | | 2.06 | | | | 0.3 | 0.08 | | | 842 |
| B07 | | 2.42 | | | | | | | | 846 |

[Table 2-1]

| No. | Type of steel | Transformation point | Hot rolling step | | | | Cold-rolling step | Intermediate annealing step | Skin pass rolling step | RR1-RR2 | Final annealing step |
|---|---|---|---|---|---|---|---|---|---|---|---|
| | | Ar$_3$ temperature | Heating temperature | Rolling reduction from Ar$_3$ + 20°C to Ar$_3$ | Rolling reduction at from less than Ar$_3$ to FT | Finishing rolling temperature FT | Rolling reduction RR1 | Annealing temperature T1 | Rolling reduction RR2 in rolling | | Annealing temperature T2 |
| | | [°C] | [°C] | [%] | [%] | [°C] | [%] | [°C] | [%] | [%] | [°C] |
| 1 | A01 | 1112 | 1300 | 20 | 25 | 1086 | 84.5 | 700 | 12.7 | 71.8 | 800 |
| 2 | A02 | 873 | 1150 | 20 | 25 | 847 | 84.5 | 700 | 11.7 | 72.8 | 800 |
| 3 | A03 | 764 | 1150 | 20 | 25 | 745 | 85.0 | 700 | 12.7 | 72.3 | 800 |
| 4 | A04 | 921 | 1150 | 20 | 25 | 894 | 84.0 | 700 | 11.5 | 72.5 | 800 |
| 5 | A05 | 837 | 1150 | 20 | 25 | 811 | 84.1 | 700 | 11.4 | 72.7 | 800 |
| 6 | A06 | 943 | 1150 | 20 | 25 | 916 | 84.5 | 700 | 13.5 | 71.0 | 800 |
| 7 | A07 | 913 | 1150 | 20 | 25 | 886 | 84.9 | 700 | 13.0 | 71.9 | 800 |
| 8 | A08 | 871 | 1150 | 20 | 25 | 844 | 84.5 | 700 | 13.1 | 71.4 | 800 |
| 9 | A09 | 935 | 1150 | 20 | 25 | 909 | 84.4 | 700 | 12.8 | 71.6 | 800 |
| 10 | A10 | 876 | 1150 | 20 | 25 | 849 | 85.6 | 700 | 12.5 | 73.1 | 800 |
| 11 | A11 | 869 | 1150 | 20 | 25 | 844 | 84.2 | 700 | 11.3 | 72.9 | 800 |
| 12 | A12 | 904 | 1150 | 20 | 25 | 879 | 84.0 | 700 | 12.2 | 71.8 | 800 |
| 13 | A13 | 944 | 1150 | 20 | 25 | 918 | 84.3 | 700 | 12.0 | 72.3 | 800 |
| 14 | B01 | 980 | 1150 | 20 | 25 | 954 | 84.8 | 700 | 11.5 | 73.3 | 800 |
| 15 | B02 | 797 | 1150 | 20 | 25 | 771 | 84.2 | 700 | 11.6 | 72.6 | 800 |
| 16 | B03 | 745 | 1150 | 20 | 25 | 720 | 86.0 | 700 | 12.1 | 73.9 | 800 |
| 17 | B04 | 998 | 1200 | 20 | 25 | 960 | 81.8 | 750 | 8.2 | 73.6 | 800 |
| 18 | B05 | 983 | 1150 | 20 | 25 | 960 | 84.1 | 890 | 11.6 | 72.5 | 800 |
| 19 | B06 | 842 | 1150 | 20 | 25 | 823 | 84.5 | 700 | 10.5 | 74 | 750 |
| 20 | B07 | 846 | 1150 | 20 | 25 | 835 | 87.8 | 700 | 13.2 | 74.6 | 850 |

EP 4 650 473 A1

[Table 2-2]

| No. | Type of steel | Transformation point | Hot rolling step | | | | Cold rolling step | Intermediate annealing step | Skin pass rolling step | RR1-RR2 | Final annealing step |
|---|---|---|---|---|---|---|---|---|---|---|---|
| | | $Ar_3$ temperature | Heating temperature | Rolling reduction from $Ar_3$ + 20°C to $Ar_3$ | Rolling reduction from less than $Ar_3$ to FT | Finishing rolling temperature FT | Rolling reduction RR1 | Annealing temperature T1 | Rolling reduction RR2 in rolling | | Annealing temperature T2 |
| | | [°C] | [°C] | [%] | [%] | [°C] | [%] | [°C] | [%] | [%] | [°C] |
| 21 | A02 | 873 | 1150 | 8 | 25 | 850 | 91.8 | 700 | 17.9 | 73.9 | 800 |
| 22 | A02 | 873 | 1150 | 10 | 25 | 850 | 85.9 | 700 | 11.5 | 74.4 | 800 |
| 23 | A02 | 873 | 1150 | 30 | 25 | 850 | 84.9 | 700 | 12.1 | 72.8 | 800 |
| 24 | A02 | 873 | 1150 | 20 | 12 | 850 | 86.0 | 700 | 12.0 | 74.0 | 800 |
| 25 | A02 | 873 | 1150 | 20 | 15 | 850 | 86.2 | 700 | 12.3 | 73.9 | 800 |
| 26 | A02 | 873 | 1150 | 20 | 30 | 850 | 86.0 | 700 | 12.2 | 73.8 | 800 |
| 27 | A02 | 873 | 1150 | 20 | 25 | 850 | 85.8 | 700 | 2.9 | 82.9 | 800 |
| 28 | A02 | 873 | 1150 | 20 | 25 | 850 | 81.2 | 700 | 6.7 | 74.5 | 800 |
| 29 | A02 | 873 | 1150 | 20 | 25 | 850 | 86.4 | 700 | 25.0 | 61.4 | 800 |
| 30 | B02 | 797 | 1150 | 8 | 25 | 770 | 86.0 | 700 | 13.8 | 72.2 | 800 |
| 31 | B02 | 797 | 1150 | 20 | 25 | 770 | 89.9 | 700 | 6.9 | 83.0 | 800 |
| 32 | B02 | 797 | 1150 | 15 | 25 | 780 | 85.3 | 720 | 11.1 | 74.2 | 850 |
| 33 | B02 | 797 | 1000 | 30 | 35 | 700 | 87.2 | 700 | 13.5 | 73.7 | 800 |
| 34 | A13 | 944 | 1200 | 20 | 25 | 850 | 82.8 | 700 | 10.1 | 72.7 | 800 |
| 35 | A13 | 944 | 1150 | 15 | 25 | 900 | 85.2 | 890 | 11.5 | 73.7 | 800 |

[Table 3-1]

| | | | | Texture after final annealing {1/2 sheet thickness part} | | | Sheet thickness | Magnetic characteristics | Rollability | Note |
|---|---|---|---|---|---|---|---|---|---|---|
| No. | Random intensity ratio of {411} <011> | | | B50L | B50D | B50C | all-direction average | Left member of Formula (2) | | |
| | | [mm] | | [T] | [T] | [T] | [T] | [T] | | |
| 1 | 3.3 | 0.30 | | 1.644 | 1.721 | 1.449 | 1.634 | 0.174 | Y | Comparative Example |
| 2 | 5.6 | 0.30 | | 1.590 | 1.788 | 1.428 | 1.649 | 0.279 | Y | Disclosure Example |
| 3 | 6.4 | 0.30 | | 1.556 | 1.807 | 1.440 | 1.653 | 0.309 | N | Comparative Example |
| 4 | 5.5 | 0.30 | | 1.574 | 1.785 | 1.472 | 1.654 | 0.262 | Y | Disclosure Example |
| 5 | 5.8 | 0.30 | | 1.532 | 1.794 | 1.421 | 1.635 | 0.318 | Y | Comparative Example |
| 6 | 5.1 | 0.30 | | 1.523 | 1.766 | 1.517 | 1.643 | 0.246 | Y | Disclosure Example |
| 7 | 5.7 | 0.30 | | 1.503 | 1.786 | 1.423 | 1.625 | 0.323 | Y | Comparative Example |
| 8 | 5.9 | 0.30 | | 1.521 | 1.796 | 1.519 | 1.658 | 0.276 | Y | Disclosure Example |
| 9 | 5.8 | 0.30 | | 1.549 | 1.788 | 1.469 | 1.648 | 0.279 | Y | Disclosure Example |
| 10 | 5.7 | 0.30 | | 1.517 | 1.788 | 1.515 | 1.652 | 0.272 | Y | Disclosure Example |
| 11 | 6.2 | 0.30 | | 1.574 | 1.792 | 1.460 | 1.654 | 0.275 | Y | Disclosure Example |
| 12 | 5.9 | 0.30 | | 1.608 | 1.792 | 1.421 | 1.653 | 0.277 | Y | Disclosure Example |
| 13 | 5.9 | 0.30 | | 1.605 | 1.794 | 1.428 | 1.655 | 0.278 | Y | Disclosure Example |
| 14 | 4.6 | 0.30 | | 1.615 | 1.754 | 1.428 | 1.638 | 0.233 | Y | Disclosure Example |
| 15 | 6.8 | 0.30 | | 1.561 | 1.814 | 1.479 | 1.667 | 0.294 | Y | Disclosure Example |
| 16 | 7.2 | 0.30 | | 1.611 | 1.824 | 1.412 | 1.668 | 0.313 | N | Comparative Example |
| 17 | 5.2 | 0.30 | | 1.608 | 1.7602 | 1.444 | 1.643 | 0.234 | Y | Inventive Example |
| 18 | 4.1 | 0.30 | | 1.589 | 1.746 | 1.487 | 1.647 | 0.208 | Y | Inventive Example |
| 19 | 6.9 | 0.30 | | 1.555 | 1.8048 | 1.457 | 1.655 | 0.299 | Y | Inventive Example |

(continued)

| | No. | Random intensity ratio of {411} <011> | [mm] | B50L [T] | B50D [T] | B50C [T] | all-direction average [T] | Left member of Formula (2) [T] | Rollability | Note |
|---|---|---|---|---|---|---|---|---|---|---|
| **Texture after final annealing {1/2 sheet thickness part}** | | | | | | | **Sheet thickness** | **Magnetic characteristics** | **Rollability** | **Note** |
| | 20 | 7.1 | 0.30 | 1.558 | 1.8026 | 1.454 | 1.654 | 0.297 | Y | Inventive Example |

[Table 3-2]

| No. | Random intensity ratio of {411} <011> | [mm] | B50L [T] | B50D [T] | B50C [T] | all-direction average [T] | Left member of Formula (2) [T] | Rollability | Note |
|---|---|---|---|---|---|---|---|---|---|
| | **Texture after final annealing {1/2 sheet thickness part}** | **Sheet thickness** | **Magnetic characteristics** | | | | | **Rollability** | **Note** |
| 21 | 3.3 | 0.30 | 1.590 | 1.691 | 1.563 | 1.634 | 0.114 | Y | Comparative Example |
| 22 | 5.1 | 0.30 | 1.595 | 1.772 | 1.453 | 1.648 | 0.248 | Y | Disclosure Example |
| 23 | 5.9 | 0.30 | 1.593 | 1.792 | 1.412 | 1.647 | 0.290 | Y | Disclosure Example |
| 24 | 3.5 | 0.30 | 1.613 | 1.731 | 1.467 | 1.636 | 0.191 | Y | Comparative Example |
| 25 | 5.4 | 0.30 | 1.590 | 1.788 | 1.428 | 1.649 | 0.279 | Y | Disclosure Example |
| 26 | 7.6 | 0.30 | 1.553 | 1.791 | 1.435 | 1.642 | 0.297 | Y | Disclosure Example |
| 27 | 3.0 | 0.30 | 1.625 | 1.707 | 1.523 | 1.640 | 0.133 | Y | Comparative Example |
| 28 | 5.0 | 0.30 | 1.610 | 1.759 | 1.580 | 1.677 | 0.164 | Y | Disclosure Example |
| 29 | 2.8 | 0.30 | 1.590 | 1.660 | 1.620 | 1.633 | 0.055 | Y | Comparative Example |
| 30 | 3.8 | 0.30 | 1.566 | 1.715 | 1.498 | 1.623 | 0.183 | Y | Comparative Example |
| 31 | 3.7 | 0.30 | 1.561 | 1.732 | 1.479 | 1.626 | 0.211 | Y | Comparative Example |

(continued)

| No. | Texture after final annealing {1/2 sheet thickness part} Random intensity ratio of {411}<011> | Sheet thickness | Magnetic characteristics | | | | | Rollability | Note |
|---|---|---|---|---|---|---|---|---|---|
| | | | B50L | B50D | B50C | all-direction average | Left member of Formula (2) | | |
| | | [mm] | [T] | [T] | [T] | [T] | [T] | | |
| 32 | 6.5 | 0.50 | 1.525 | 1.779 | 1.471 | 1.639 | 0.281 | Y | Disclosure Example |
| 33 | 7.7 | 0.30 | 1.571 | 1.789 | 1.415 | 1.641 | 0.296 | Y | Disclosure Example |
| 34 | 7.6 | 0.30 | 1.553 | 1.801 | 1.442 | 1.649 | 0.304 | Y | Disclosure Example |
| 35 | 4.2 | 0.30 | 1.525 | 1.746 | 1.481 | 1.625 | 0.243 | Y | Disclosure Example |

As can be seen from Examples above, the non-oriented electromagnetic steel sheet according to the disclosure is small in-plane anisotropy and has excellent magnetic characteristics on all-direction average by appropriate control of the chemical composition, hot rolling conditions, cold rolling conditions, intermediate annealing conditions, skin pass rolling conditions, and final annealing step conditions. The rollability is also favorable.

In addition to the above Examples, Examples with the hot rolling step, the cold rolling step, the intermediate rolling step, the skin pass rolling step, and the final annealing step performed in conditions shown in Table 4 are also shown. In the following Examples, not only the above characteristics and rollability, but also the following characteristics were examined.

· Random intensity ratio of {411}<011> at 1/2 sheet thickness part after intermediate annealing and before skin pass
· Random intensity ratio of {411}<011> at 1/8 sheet thickness part after intermediate annealing and before skin pass
· Random intensity ratio of {411}<011> at 1/8 sheet thickness part after final annealing

The random intensity ratio of {411}<011> at the 1/8 sheet thickness part was measured in the same manner as in the random intensity ratio of {411}<011> at the 1/2 sheet thickness part except that the measurement position corresponded to the 1/8 sheet thickness part.

[Table 4-1]

| No. | Type of steel | Transformation point | Hot rolling step | | | | Cold-rolling step | Intermediate annealing step | Texture after intermediate annealing (1/2 sheet thickness part) | Texture after intermediate annealing (1/8 sheet thickness part) | Skin pass rolling step | RR1-RR2 | Final annealing step |
|---|---|---|---|---|---|---|---|---|---|---|---|---|---|
| | | Ar$_3$ temperature | Heating temperature | Rolling reduction from Ar$_3$ + 20°C to Ar$_3$ | Rolling reduction from less than Ar$_3$ to FT | Finishing rolling temperature FT | Rolling reduction on RR1 | Annealing temperature T1 | Random intensity ratio of {411} <011> | Random intensity ratio of {411} <011> | Rolling reduction in RR2 in rolling | | Annealing temperature T2 |
| 36 | B01 | 980 | 1100 | 30 | 42 | 880 | 75.0 | 950 | 0.8 | 16.8 | <u>1.2</u> | 73.8 | 800 |
| 37 | B01 | 980 | 1100 | 30 | 45 | 750 | 75.0 | 950 | 3.2 | 0.9 | 10.0 | <u>65.0</u> | 800 |
| 38 | B01 | 980 | 1150 | 20 | 25 | 954 | 84.8 | 700 | 4.1 | 3.8 | 11.5 | 73.3 | 800 |

22

[Table 4-2]

| No. | Random intensity ratio of {411}<011> | Random intensity ratio of {411}<011> | | B50L | Texture after final annealing {1/2 sheet thickness part} B50D | Texture after final annealing (1/8 sheet thickness part) B50C | Sheet thickness all-direction average | Magnetic characteristics after final annealing Left member of Formula (2) | Rollability | Note |
|---|---|---|---|---|---|---|---|---|---|---|
| 36 | 2.5 | 3.0 | 0.30 | 1.000 | 1.650 | 1.700 | 1.500 | 0.300 | Y | Comparative Example |
| 37 | 3.7 | 3.8 | 0.25 | 1.582 | 1.703 | 1.523 | 1.628 | 0.151 | Y | Comparative Example |
| 38 | 4.6 | 4.8 | 0.30 | 1.615 | 1.754 | 1.428 | 1.638 | 0.233 | Y | Disclosure Example |

From Examples above, the non-oriented electromagnetic steel sheet according to the disclosure is small in-plane anisotropy and has excellent magnetic characteristics on all-direction average by appropriate control of the chemical composition, hot rolling conditions, cold rolling conditions, intermediate annealing conditions, skin pass rolling conditions, and final annealing step conditions. The rollability is also favorable.

In particular, it can be seen that, in No. 36, the rolling reduction of each of cold rolling and skin pass rolling is low, both the random intensity ratio of {411}<011> at the 1/2 sheet thickness part after intermediate annealing and before skin pass, and the random intensity ratio of {411} <011> at the 1/2 sheet thickness part after final annealing are low, and magnetic characteristics are deteriorated.

It can also be seen as shown with respect to No. 37 that the rolling ratio and the difference RR1 - RR2 in cold rolling are low, both the random intensity ratio of {411}<011> at the 1/2 sheet thickness part after intermediate annealing and before skin pass, and the random intensity ratio of {411}<011> at the 1/2 sheet thickness part after final annealing are low, and magnetic characteristics are deteriorated.

It can also be seen from these results that cold rolling conditions and skin pass rolling conditions are appropriately controlled, to largely change the texture in final annealing, and enhance the in-plane anisotropy and the all-direction average.

INDUSTRIAL APPLICABILITY

The disclosure can provide a non-oriented electromagnetic steel sheet which is small in-plane anisotropy and which can obtain excellent magnetic characteristics on all-direction average, and thus is extremely industrially useful.

The disclosure of JP-A No. 2023-001933 is herein incorporated by reference in its entirety.

All literature, patent applications, and technical standards described herein are herein incorporated by reference, as if each individual literature, patent application, and technical standard were specifically and individually indicated to be incorporated by reference.

**Claims**

1. A non-oriented electromagnetic steel sheet, comprising:

in percentage by mass,
C: 0.0100% or less;
Si: from 1.50% to 4.00%;
sol.Al: from 0.0001% to 1.0%;
S: 0.0100% or less;
N: 0.0100% or less;
Mn: 0.10% or more;
one kind or a plurality of kinds selected from Mn, Ni, or Cu: less than 2.50% in total;
Mo: from 0.00% to less than 2.50%;
Cr: from 0.00% to less than 2.50%;
Ti: from 0.000% to 0.005%;
Nb: from 0.000% to 0.005%;
Sn: from 0.000% to 0.400%;
Sb: from 0.000% to 0.400%;
P: from 0.000% to 0.400%; and
one kind or a plurality of kinds selected from the group consisting of Mg, Ca, Sr, Ba, Ce, La, Nd, Pr, Zn, and Cd: from 0.0000% to 0.0100% in total, wherein:

the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C, and the balance consists of Fe and impurities,
a sheet thickness is 0.50 mm or less, and
a random intensity ratio of {411}<011> at a 1/2 sheet thickness part is 4.0 or more:

$$Ar_3 (°C) = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \tag{1}$$

2. A non-oriented electromagnetic steel sheet, comprising:

in percentage by mass,
C: 0.0100% or less;
Si: from 1.50% to 4.00%;
sol.Al: from 0.0001% to 1.0%;
S: 0.0100% or less;
N: 0.0100% or less;
Mn: 0.10% or more;
one kind or a plurality of kinds selected from Mn, Ni, Co, Pt, Pb, Au, or Cu: less than 2.50% in total;
Mo: from 0.00% to less than 2.50%;
Cr: from 0.00% to less than 2.50%;
Ti: from 0.000% to 0.005%;
Nb: from 0.000% to 0.005%;
Sn: from 0.000% to 0.400%;
Sb: from 0.000% to 0.400%;
P: from 0.000% to 0.400%; and
one kind or a plurality of kinds selected from the group consisting of Mg, Ca, Sr, Ba, Ce, La, Nd, Pr, Zn, and Cd: from 0.0000% to 0.0100% in total, wherein:

the non-oriented electromagnetic steel sheet has a chemical composition in which, in a case in which, in percentage by mass, a C content is [C], an Mo content is [Mo], a Cr content is [Cr], an Mn content is [Mn], an Ni content is [Ni], a Cu content is [Cu], an Si content is [Si], a sol.Al content is [sol.Al], and a P content is [P], a transformation temperature $Ar_3$ (°C) defined by the following Formula (1) is from 750 to 1050°C, and the balance consists of Fe and impurities,
a sheet thickness is 0.50 mm or less, and
a random intensity ratio of {411}<011> at a 1/2 sheet thickness part is 4.0 or more:

$$Ar_3 \text{ (°C)} = 1020 - 325 \times [C] + 33 \times [Si] + 287 \times [P] + 80 \times [sol.Al] - 120 \times ([Mn] + [Mo] + [Cu]) - 46 \times ([Cr] + [Ni]) \quad (1).$$

3. The non-oriented electromagnetic steel sheet according to claim 1 or 2, wherein a magnetic flux density $B_{50}$ in a 45° direction with respect to a rolling direction is 1.75 T or more.

4. The non-oriented electromagnetic steel sheet according to claim 3, wherein, in a case in which a value of a magnetic flux density $B_{50}$ in a rolling direction is $B_{50L}$, a value of the magnetic flux density $B_{50}$ in a 45° direction with respect to a rolling direction is $B_{50D}$, and a value of a magnetic flux density $B_{50}$ in a 90° direction with respect to a rolling direction is $B_{50C}$, the following Formula (2) is satisfied:

$$\left| B_{50D} - (B_{50L} + B_{50C})/2 \right| \leq 0.3 \ \dots \ (2).$$

# FIG. 1

## INTERNATIONAL SEARCH REPORT

| International application No. |
| --- |
| **PCT/JP2024/000131** |

| A. | CLASSIFICATION OF SUBJECT MATTER |
| --- | --- |

*C22C 38/00*(2006.01)i; *C22C 38/60*(2006.01)i; *H01F 1/147*(2006.01)i; *C21D 8/12*(2006.01)n
FI: C22C38/00 303U; C22C38/60; H01F1/147 175; C21D8/12 A

According to International Patent Classification (IPC) or to both national classification and IPC

| B. | FIELDS SEARCHED |
| --- | --- |

Minimum documentation searched (classification system followed by classification symbols)

C22C38/00-C22C38/60; H01F1/147; C21D8/12; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | JP 2021-134383 A (NIPPON STEEL CORPORATION) 13 September 2021 (2021-09-13) claims, paragraphs [0035], [0066], examples A2, B1, C1, D1, E1 | 1-4 |
| X | JP 2020-139198 A (NIPPON STEEL CORPORATION) 03 September 2020 (2020-09-03) claims, paragraphs [0073], [0089], examples 1A, 1B, 1C, 2 | 1-4 |
| A | JP 2006-219692 A (NIPPON STEEL CORP.) 24 August 2006 (2006-08-24) claims, paragraphs [0001]-[0011], [0044] | 1-4 |
| A | WO 2020/153387 A1 (JFE STEEL CORPORATION) 30 July 2020 (2020-07-30) entire text, all drawings | 1-4 |
| A | WO 2022/196805 A1 (NIPPON STEEL CORPORATION) 22 September 2022 (2022-09-22) entire text | 1-4 |
| A | WO 2022/211007 A1 (NIPPON STEEL CORPORATION) 06 October 2022 (2022-10-06) entire text | 1-4 |

☑ Further documents are listed in the continuation of Box C.     ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **25 March 2024** | **02 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/000131**

| C. | DOCUMENTS CONSIDERED TO BE RELEVANT | |
|---|---|---|
| Category* | Citation of document, with indication, where appropriate, of the relevant passages | Relevant to claim No. |
| P, A | KR 10-2023-0094459 A (POSCO) 28 June 2023 (2023-06-28)<br>entire text | 1-4 |

Form PCT/ISA/210 (second sheet) (July 2022)

## INTERNATIONAL SEARCH REPORT
### Information on patent family members

International application No.

**PCT/JP2024/000131**

| Patent document cited in search report | | | Publication date (day/month/year) | Patent family member(s) | | Publication date (day/month/year) |
|---|---|---|---|---|---|---|
| JP | 2021-134383 | A | 13 September 2021 | (Family: none) | | |
| JP | 2020-139198 | A | 03 September 2020 | (Family: none) | | |
| JP | 2006-219692 | A | 24 August 2006 | (Family: none) | | |
| WO | 2020/153387 | A1 | 30 July 2020 | US 2022/0064751 entire text, all drawings | A1 | |
| | | | | EP 3916113 | A1 | |
| | | | | TW 202028480 | A | |
| | | | | KR 10-2021-0099111 | A | |
| | | | | CN 113366124 | A | |
| | | | | CA 3127170 | A1 | |
| | | | | MX 2021008802 | A | |
| | | | | RU 2771133 | C1 | |
| WO | 2022/196805 | A1 | 22 September 2022 | EP 4310202 entire text | A1 | |
| | | | | TW 202248432 | A | |
| | | | | CN 117098865 | A | |
| | | | | KR 10-2023-0145142 | A | |
| | | | | BR 112023018538 | A2 | |
| WO | 2022/211007 | A1 | 06 October 2022 | US 2024/0043970 entire text | A1 | |
| | | | | EP 4276210 | A1 | |
| | | | | TW 202248436 | A | |
| | | | | KR 10-2023-0118706 | A | |
| | | | | CN 116897213 | A | |
| | | | | BR 112023014920 | A2 | |
| KR | 10-2023-0094459 | A | 28 June 2023 | WO 2023/121200 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4029430 B
- JP 6319465 B
- JP 2017193731 A
- WO 2021095846 A

- JP 2021080501 A
- JP 2020100860 A
- JP 2023001933 A